# EUROPEAN PATENT APPLICATION

(11) **EP 2 209 317 A2**
(43) Date of publication of application: **21.07.2010**
(21) Application number: 09011767.2
(22) Date of filing: 15.09.2009
(51) Int. Cl.: H04N 7/26, H04N 7/50

(54) **Method of measuring a similarity degree of digital video contents, method of managing video contents using the same and management system for video contents using the method of managing video contents**

(30) Priority: 16.09.2008 KR 20080090771
(71) Applicant: WIDILAB, Gangnam-gu Seoul (KR)
(72) Inventor: Uhm, Won-Suhk, Goyang-shi Gyeonggi-do (KR); Sim, Sang-Gyoo, Gangnam-gu Seoul (KR)
(74) Representative: Scheele, Friedrich

(57) **Abstract**

A method of measuring a similarity degree of digital video contents is provided as follows. Firstly, scene conversion of a video content is detected to divide the video content into a plurality of scenes. Then, a first scene feature is extracted from a first scene of the divided scenes. Thereafter, a similarity degree is measured by comparing the extracted first scene feature of the first scene with a second scene feature of a second scene. Thus, a similarity degree of digital video contents may be effectively measured, the digital video contents may be prevented from illegal sharing, and additional contents information related to the digital video contents may be provided when playing the digital video contents. Therefore, the method may be effectively used in contents management and contents circulation.

## Description

### BACKGROUND OF THE INVENTION

### 1. Field of the Invention

Example embodiments of the present invention relate to a method of measuring a similarity degree of digital video contents, a method of managing video contents using the method of measuring a similarity degree of digital video contents, and a management system for video contents using the method of managing video contents. More particularly, example embodiments of the present invention relate to a method of measuring a similarity degree of digital video contents for judging whether the digital video contents are similar or not, a method of managing video contents using the method of measuring a similarity degree of digital video contents, and a management system for video contents using the method of managing video contents.

### 2. Description of the Related Art

According as internet media bocomes a general means for exchanging and obtaining information, video contents are easily and frequently shared.

Thus, regarding various video contents that are provided from broadcasting companies such as a general sky wave broadcasting, a digital multimedia broadcasting (DMB), an internet broadcasting, etc., after the video contents are obtainted by a first contents consumer, the video contents are easily transferred to a second contents consumer by using an internet medium such as a sharing website.

However, such information transfer may be transferred to the second contents consumer against the intention of the copyrighter of the information, thereby infringing on the intellectual property right of the copyrighter, and incurring serious problems, that is, works of the copyrighter with great cost and effort are illegally circulated on the internet. Furthermore, there is a more serious problem that sharing the works of the copyrighter does not generate a few contents consumer, but greatly generates illegal contents consumer.

Thus, a management method of video contents is required for preventing such sharing of illegal video contents, and thus a method of effectively measuring a similarity degree of digital video contents is required.

### SUMMARY OF THE INVENTION

Example embodiments of the present invention provide a method of measuring similarity of digital video contentsfor providing a standard of judgement whether the digital video contents are similar or not.

Example embodiments of the present invention also provide a method of managing video contents capable of preventing illegal share of the video contents by using the method of measuring similarity of digital video contents.

Example embodiments of the present invention still also provide a management system for video contents using the method of managing video contents.

According to one aspect of the present invention, a method of measuring a similarity degree of digital video contents is provided as follows. Firstly, scene conversion of a video content is detected to divide the video content into a plurality of scenes. Then, a first scene feature is extracted from a first scene of the divided scenes. Thereafter, a similarity degree is measured by comparing the extracted first scene feature of the first scene with a second scene feature of a second scene.

The first scene may include a plurality of first frames. The first scene feature may be extracted as follows. A first frame feature is extracted from each of the first frames. Then, first frame features extracted from the first frames are grouped to define the first scene feature of the first scene. The second scene may include a plurality of second frames. The second scene feature may be extracted as follows. A second frame feature is extracted from each of the second frames. Then, second frame features extracted from the second frames are grouped to define the second scene feature of the second scene.

Extracting the first frame feature from the first frame may include histogramming angles of motion vectors of the first frame and selecting a predetermined number of motion vectors in order of magnitude of the histogrammed angles to define the first frame feature of the first frame. Extracting the second frame feature from the second frame may include histogramming angles of motion vectors of the second frame and selecting a predetermined number of motion vectors in order of magnitude of the histogrammed angles to define the second frame feature of the second frame.

In an exemplary embodiment, the similarity degree may be measured by calculating a Euclidean distance between an average of the first frame features of the first frames of the first scene and an average of the second frame features of the second frames of the second scene.

In another exemplary embodiment, the similarity degree may be measured by calculating an average of Euclidean distances between each first frame feature of the first frames of the first scene and each second frame feature of the second frames of the second scene.

Before detecting the scene conversion of the video content to divide the video content into the plurality of scenes, a feature may be extracted by indexing signals that is transferred via a digital broadcast in real-time and the extracted feature may be stored in a feature databasea feature database. The second scene may be included in video contents stored in the feature database.

According to another aspect of the present invention, a method of managing video contents is provided as follows. A request for registration of at least one first video content that is provided to a contents consumer is received from a service provider of video contents. Then, a first feature is extracted from the first video content to store and register the extracted first feature in a feature database. Thereafter, an inquiry whether a second video content is registered in the feature database or not is received from a sharing website, when the second video content is shared in the sharing website. A second feature is extracted from at least portion of the second video content, and it is judged whether the first video content and the second video content are similar or not by comparing the extracted second feature with the first feature stored in the feature database.

In an exemplary embodiment, the first and second features may be extracted from first and second scenes or first and second frames of the first and second video contents, respectively.

After judging whether the first video content and the second video content are similar or not, the service provider may be informed of the similarity between the first video content and the second video content. In case that the first video content and the second video content are similar, an advertisement may be compulsorily imposed on the second video content or downloading the second video content may be fee-charged for.

The inquiry whether the second video content is registered in the feature database or not may be received when the contents consumer requests to upload the second video content on the sharing website. In case that the first video content and the second video content are similar, the sharing website may reject the request of uploading the second video content.

Before extracting the first feature from the first video content to store and register the extracted first feature in the feature database, the at least one first video content may be monitored and collected in real-time.

In case that the first video content and the second video content are similar, additional information related to the first video content may be provided to a consumer of the second video content.

According to still another aspect of the present invention, a management system for video contents includes a contents collecting section collecting a first video content from a service provider that provides a first video content to a contents consumer, a feature extracting section extracting a first feature from the first video content collected by the contents collecting section, a feature database for storing the first feature extracted by the feature extracting section, an inquiry receiving section receiving an inquiry whether a second video content is registered in the feature database or not from a sharing website, when the second video content is shared in the sharing website, and a similarity judging section judging whether the first video content and the second video content are similar or not by comparing a second feature of the second video content with the first feature stored in the feature database.

In an exemplary embodiment, the inquiry receiving section may receive at least portion of the second video content from the sharing website, and the feature extracting section may extract the second feature from the received portion of the second video content and transfers the extracted second feature to the similarity judging section. In another exemplary embodiment, in the sharing website, the second feature of the second video content may be extracted and transferred to the inquiry receiving section, and the inquiry receiving section may transfer the second feature of the second video content to the similarity judging section.

The management system may further include an inquiry response section informing the sharing website of the similarity between the first video content and the second video content. The management system may further include a similarity informing section informing the service provider of the similarity between the first video content and the second video content.

The management system may further include an additional information database for storing additional information related to a plurality of additional video contents, and an additional information transferring section providng information related to the first video content of the additional information to a consumer of the second video content, in case that the first video content and the second video content are similar.

According to still another aspect of the present invention, a method of managing video contents is provided as follows. Firstly, a request for registration of at least one first video content that is provided to a contents consumer is received from a service provider of video contents. Then, a first feature is extracted from the first video content to store and register the extracted first feature in a feature database. Thereafter, information related to the second video content is received, when the second video content is played by the contents consumer. Then, it is judged whether the first video content and the second video content are similar or not by comparing a second feature of the second video content with the first feature stored in the feature database.

In case that the first video content and the second video content are similar, additional information related to the first video content may be provided.

In an exemplary embodiment, before judging whether the first video content and the second video content are similar or not, the second feature may be extracted from the second video content. In another exemplary embodiment, the information related to the second video content may include the second feature of the second video content.

According to the present invention, a scene feature extracted from a scene of a digital video content is compared with a scene feature of another video content to thereby effectively measure a similarity degree of digital video contents.

In addition, a feature is extracted from a video content that requires sharing prevention on the purpose of copyright protection or other purposes, and is databased. Thus, when a video content is shared, a feature is extracted from the video contents to be compared with the video content for protection from sharing, and it is judged whether the video content for protection and the shared video content are similar or not, thereby preventing the video content for protection from being illegally shared and previously shielding illegal contents consumers that may greatly increase.

In addition, video contents for protection from sharing may be collected in real-time, and sharing action may be grasped and reported, thereby providing a safe system for sharing prevention.

In addition, information of other video contents related to video contents played by a contents consumer may be additionally provided to the contents consumer in real-time.

Therefore, the present invention may be effectively used in contents management and contents circulation.

### BRIEF DESCRIPTION OF THE DRAWINGS

The above and other features and advantages of the present invention will become more apparent by describing in detailed example embodiments thereof with reference to the accompanying drawings.
FIG. 1 is a flow-chart illustrating a method of measuring a similarity degree of digital video contents according to an exemplary embodiment of the present invention.
FIG. 2 is a flow-chart illustrating a method of managing video contents according to an exemplary embodiment of the present invention.
FIG. 3 is a block diagram illustrating a method of managing video contents according to an exemplary embodiment of the present invention.
FIG. 4 is a flow-chart illustrating a method of managing video contents according to another exemplary embodiment of the present invention.
FIG. 5 is a block diagram illustrating a method of managing video contents according to another exemplary embodiment of the present invention.
FIG. 6 is a block diagram illustrating a management system of video contents according to an exemplary embodiment of the present invention.
FIG. 7 is a block diagram illustrating a management system of video contents according to another exemplary embodiment of the present invention.
FIG. 8 is a block diagram illustrating a management system of video contents according to still another exemplary embodiment of the present invention.

### DETAILED DESCRIPTION OF THE INVENTION

The present invention is described more fully hereinafter with reference to the accompanying drawings, in which example embodiments of the present invention are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity.

It will be understood that when an element or layer is referred to as being "on," "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

It will be understood that, although the terms first, second, third etc. may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present invention.

The terminology used herein is for the purpose of describing particular example embodiments only and is not intended to be limiting of the present invention. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Example embodiments of the invention are described herein with reference to cross-sectional illustrations that are schematic illustrations of idealized example embodiments (and intermediate structures) of the present invention. As such, variations from the shapes of the illustrations as a result, for example, of manufacturing techniques and/or tolerances, are to be expected. Thus, example embodiments of the present invention should not be construed as limited to the particular shapes of regions illustrated herein but are to include deviations in shapes that result, for example, from manufacturing. For example, an implanted region illustrated as a rectangle will, typically, have rounded or curved features and/or a gradient of implant concentration at its edges rather than a binary change from implanted to non-implanted region. Likewise, a buried region formed by implantation may result in some implantation in the region between the buried region and the surface through which the implantation takes place. Thus, the regions illustrated in the figures are schematic in nature and their shapes are not intended to illustrate the actual shape of a region of a device and are not intended to limit the scope of the present invention.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

Hereinafter, example embodiments according to the present invention will be explained in detail with reference to the accompanying drawings.

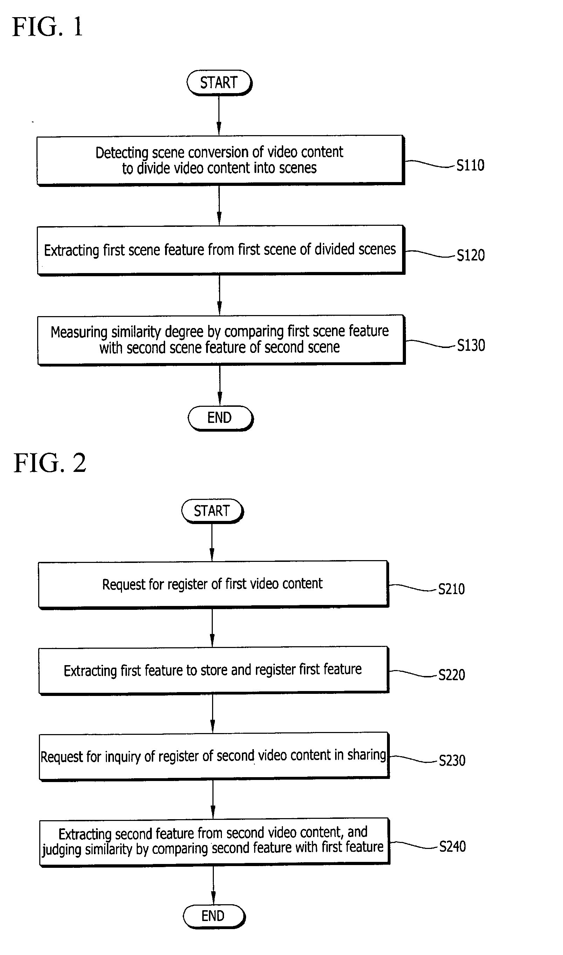

FIG. 1 is a flow-chart illustrating a method of measuring a similarity degree of digital video contents according to an exemplary embodiment of the present invention.

Referring to FIG. 1, in order to measure a similarity degree of digital video contents, firstly, scene conversion of a video content is detected to divide the video content into a plurality of scenes in step S110.

For example, it may be an important factor how many scenes between two video contents are substantially the same, so as to measure a similarity degree of digital video contents.

For example, the video contents may include a digital video content compressed in an MPEG-2 TS type. In this case, since the digital video content is coded in a binary code, at first, scene conversion of the coded digital video content is detected to divide the video content into the plurality of scenes, and the scenes of the two video contents may be compared whether the scenes of the two video contents are similar, same or not.

For example, when a compressed digital video content includes an I-frame frame, a P-frame, and a B-frame, the scene conversion may be detected by using an attribute that a residual energy is rapidly changed.

In addition, when the compressed digital video content just includes an I-frame and a P-frame, regardless of the residual energy, the scene conversion may be detected by using an attribute that the scene conversion is achieved when a rate between an intra-block and a motion compensation block (MC-block) is rapidly changed in a predetermined P-frame.

Thereafter, a first scene feature is extracted from a first scene of the divided scenes in step S120.

In order to know whether one scene of the divided scenes is similar to scenes included in other video contents, a scene feature of each scene may be defined so as to numerically represent a unique characteristic of the scene by a predetermined method. Thus, the word "feature" in the present specification is used as a selection factor capable of selecting similar scene. Any one scene of the divided scenes is defined as the "first scene".

Each first scene may include a plurality of first frames. Thus, the first scene feature of the first scene may be determined by the plurality of first frames. For example, a first frame feature serving as a numerical slection factor is extracted from each first frame, and the extracted first frame features may be considered to form a first scene feature.

In an exemplary embodiment, in order to extract the first scene feature, the first frame feature are extracted from each of the first frames, and then the first frame features extracted from the first frames are grouped to define the first scene feature of the first scene.

Here, in order to extract the first frame feature from the first frame, firstly, angles of motion vectors of the first frame are histogrammed. A histogram for a frame represents an overall motion trend, and a motion corresponding to a small angle in the histogram may be considered to be generated including a random error added to a real motion. Thus, the motion corresponding to a small angle in the histogram may be excluded from the overall motion trend representing the frame. Thus, a predetermined number of motion vectors may be selected in order of magnitude of the histogrammed angles, and the selected motion vectors may be defined as the first frame feature of the first frame. The predetermined number may be, for example, three to five. As described above, for each first frame included in the first scene, a predetermined number of data chosen as the first frame feature are extracted from each first frame, and data for all of the first frames are grouped to thereby define the selection factor for the first scene, i.e., the first scene feature.

Thereafter, a similarity degree is measured by comparing the extracted first scene feature of the first scene with a second scene feature of a second scene in step S130.

For example, the second scene may belong to a digital video content corresponding to a comparison target. The first scene may be compared with the second scene to judge the similarity therebetween. Thus, the similarity degree may be measured by comparing the numericalized first scene feature of the first scene with the numericalized second scene feature of the second scene.

Similarly to the first scene, the second scene may also include a plurality of second frames, and the second scene feature may be extracted in substantially the same method as the first scene feature. In addition, the second frame feature may be extracted from the second frame in substantially the same method as the first frame feature.

Measuring the similarity may simply come to measuring a distance between the numericalized first scene feature and the numericalized second scene feature.

Thus, in an exemplary embodiment, a Euclidean distance between an average of the first frame features of the first frames of the first scene and an average of the second frame features of the second frames of the second scene is calculated, and the Euclidean distance may be regarded as the similarity degree.

In another exemplary embodiment, an average of Euclidean distances between each first frame feature of the first frames of the first scene and each second frame feature of the second frames of the second scene is calculated, and the average of the Euclidean distance may be regarded as the similarity degree.

Before the scene conversion of the video content is detected to divide the video content into the plurality of scenes in step S110, a feature may be extracted by indexing signals that is transferred via a digital broadcast in real-time, and the extracted feature is stored in a feature database, thereby databasing features of various video contents from the digital broadcast in real-time. The second scene is included in video contents stored in the feature database

Hereinafter, a method of managing video contents by using the above-described method of measuring a similarity degree of video contents will be described in detail.

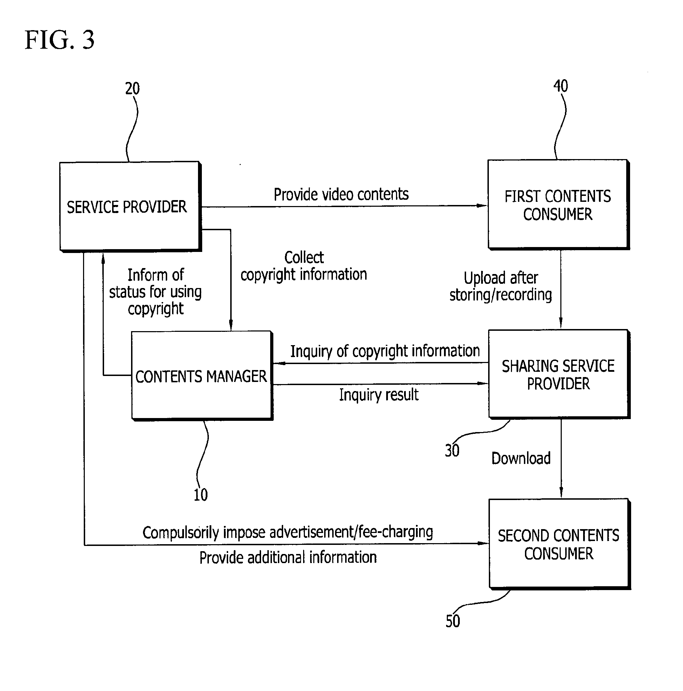

FIG. 2 is a flow-chart illustrating a method of managing video contents according to an exemplary embodiment of the present invention. FIG. 3 is a block diagram illustrating a method of managing video contents according to an exemplary embodiment of the present invention. In the present embodiment, management target contents in managing video contents correspond to, for example, video contents exposed to copyright infringement. Alterantively, regardless of copyright infringement, various harmful video contents, nonlicensed video contents, etc. may be included in the management target contents.

Referring to FIGS. 2 and 3, in order to manage video contents, firstly, a contents manager 10 receives a request for registration of at least one first video content that is provided to a contents consumer from a service provider 20 of video contents in step S210.

The first video content corresponds to a target video content, copyright protection of which is needed. The at least one first video content may include one or more video contents. The service provider 20 may include, for example, a sky wave broadcasting server. Alternatively, the service provider 20 may include a DMB broadcasting server, an internet broadcasting server, etc., and an on-line music server. The request of the service provider 20 may be concretely performed such as indicating a particular video content, but may be abstractly perforemd. For example, the service provider 20 may request for the copyright protection of all the video contents provided from the service provider 20. In this case, the contents manager 10 collects copyright information of all the video contents provided from the service provider 20.

Thereafter, the contents manager 10 extracts a first feature from the first video contents to store and register the extracted first feature in a feature database in step S220.

The service provider 20 may request for registration of a plurality of the first video contents, and the feature database may store the plurality of the first video contents. After a scene or a frame is detected from a video stream of the first video contents, the first feature may be extracted from the scene or the frame. The first feature may be coded, for example, in a binary code. The feature database may also store a feature of video contents registered from other service provider, in addition to the first feature of the first video contents registered from the service provider 20.

Before the contents manager 10 extracts the first feature from the first video contents to store and register the first feature in the feature database, the at least one first video content may be monitored and collected in real-time. For example, when the service provider 20 is a sky wave broadcasting server, video contents broadcasted in sky wave are collected in real-time, and the first feature may be extracted from the collected video contents.

Then, when a second video content is shared in a sharing website, the contents manager 10 receives an inquiry whether the second video content is registered in the feature database or not from a managing server of the sharing website in step S230.

The sharing website corresponds to an internet website, and a sharing service provider 30 managing the internet website may include, for example, a server providing a free or charged sharing service as YouTube or Pandora TV. Alternatively, the sharing service provider 30 managing the internet website may include a personal server on purpose of profit or nonprofit.

The second video content may be shared by a first contents consumer 40. The first contents consumer 40 may obtain the first video content by downloading or storing the first video content. For example, in case that the service provider 20 includes a sky wave broadcasting server, the first contents consumer 40 may obtain the first video content by recording the first video content using a recording device such as a videotape recorder. In this case, the video content include the first video content, and copyright thereof may be infringed when the video content is shared. Thus, when a certain second video content is shared, an inquiry may be requested whether the second video content infringes copyright or not.

In an exemplary embodiment, the request of the inquiry whether the second video content is registered or not may be performed when the second video content is uploaded in the sharing website by the first contents consumer 40. Alternatively, the request of the inquiry whether the second video content is registered or not may be performed after the second video content is uploaded in the sharing website.

Thereafter, a second feature is extracted from at least portion of the second video content by the contents manager 10 so as to judge whether the second video content belongs to video contents registered in the feature database. The extracted second feature is compared with the first feature stored in the feature database, and judged whether the first video content and the second video content are similar or not in step S240.

As described above, when the second video content includes at least portion of the first video content provided from the service provider 20 is downloaded and stored or recorded by the first contents consumer 40, the second video content may infringe copyright of the service provider 20.

The judgement whether the first video content and the second video content are similar or not is a criterion for judgement whether the shared second video content infringes copyright of the first video content registered in a copyright protection list or not. For example, in order to judge whether the first video content and the second video content are similar or not, the similarity degree between the first and second video contents may be presented by percentage. Thus, for example, after a reference similarity degree is determined in advance, in case that the similarity degree is greater than the reference similarity degree, it may be determined that the first video content and the second video content are similar. The similarity between the first video content and the second video content may include sameness.

The service provider of video contents 20 and/or the sharing service provider 30 may be informed of the similarity between the first video content and the second video content or the similarity degree. When the second video content is substantially the same as or similar to the first video content registered in the copyright protection list, the contents manager 10 may exercise the copyright to the second contents consumer 50 that downloads the second video content from the sharing website of the sharing service provider 30, at the dictation of the service provider 20 or by the service provider 20, by compulsorily imposing an advertisement on the second video content or fee-charging for downloading the second video content. In order to compulsorily imposing an advertisement on the second video content, for example, a plugin may be employed. In addition, the method of managing video contents according to an exemplary embodiment of the present invention may be applied to the second contents consumer 50.

Alternatively, when the second video content infiringes the copyright of the first video contents registered in the copyright protection list, the sharing service provider 30 may reject the request of uploading the second video content of the first contents consumer 40 or stop uploading the second video content. After the second video content is already uploaded, the sharing service provider 30 may delete the uploaded second video content or the uploaded second video content may be sharing-restricted.

According to the above described method of managing video contents, a feature is extracted from a video content that requires sharing prevention on the purpose of copyright protection or other purposes, and is databased. Thus, when a video content is shared, a feature is extracted from the video contents to be compared with the video content for protection from sharing, and it is judged whether the video content for protection and the shared video content are similar or not, thereby preventing the video content for protection from being illegally shared and previously shielding illegal contents consumers that may greatly increase.

When the second video content is substantially the same as or similar to the first video content, additional information related to the first video contents may be provided to the second contents consumer 50. Since the first video content is substantially the same as or similar to the second video content, it may be expected that the second contents consumer 50 having an interest in the second video content also has an interest in additional information related to the first video content, which is already stored. Thus, the additional information may be provided to the second contents consumer 50, thereby effectively managing video contents.

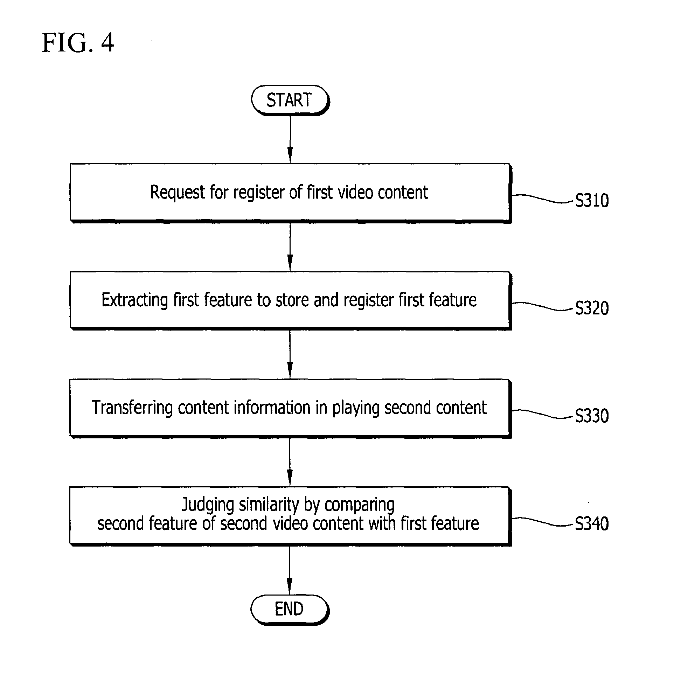

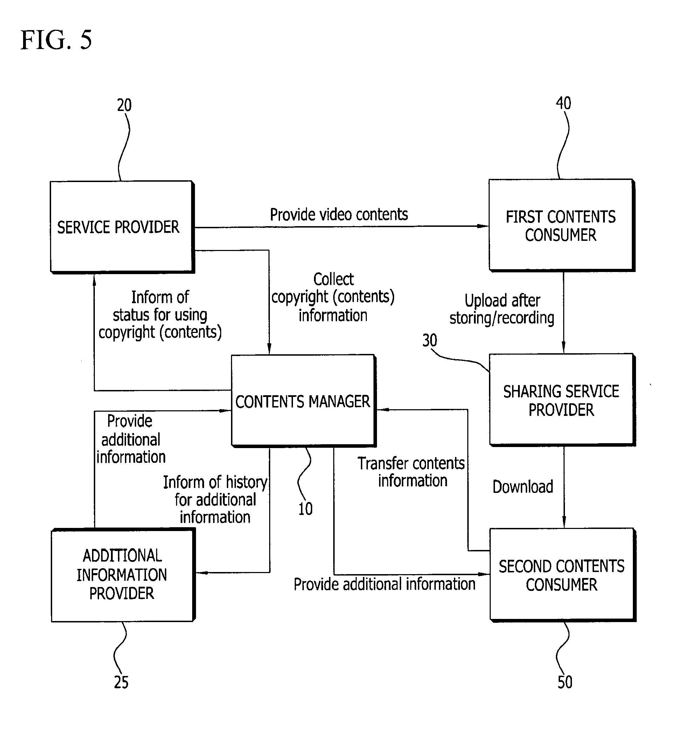

FIG. 4 is a flow-chart illustrating a method of managing video contents according to another exemplary embodiment of the present invention. FIG. 5 is a block diagram illustrating a method of managing video contents according to another exemplary embodiment of the present invention.

Referring to FIGS. 4 and 5, in order to manage video contents, firstly, a contents manager 10 receives a request for registration of at least one first video content that is provided to a contents consumer from a service provider 20 of video contents in step S310. Then, the contents manager 10 extracts a first feature from from the first video content, and store and register the extracted first feature in a feature database in step S320. Step S310 and step S320 is substantially the same as step S210 and step S220 illustrated in FIGS. 2 and 3. Thus, any further description will be omitted. In FIGS. 4 and 5, collecting information may include collecting copyright information and collecting contents infromation.

Thereafter, when the second contents consumer 50 plays the second video content, information related to the second video content may be transferred to the second contents consumer 50 in step S330. The transfer may be spontaneously achieved in a video contents player by using, for example, a plugin.

The contents manager 10 may extract the second feature from the second video contents in substantially the same method as in FIGS. 2 and 3. Alternatively, the information related to the second video content may include a second feature of the second video content, and the contents manager 10 may judge similarity by using the transferred second feature, which will be decribed later.

Then, the second feature of the second video content is compared with the first feature stored in the feature database, and the similarity degree between the first video content and the second video content is judged in step S340.

Processes after the judgement of the similarity may be substantially the same as in FIGS. 2 and 3.

In case that the first video content and the second video content are similar, the contents manager 10 may provide additional information related to the first video content. For example, the additional information may be provided by an additional information provider 25. The additional information provider 25 may be the same as or different from the service provider 20.

Hereinafter, a management system of the contents manager 10 will be described in detail.

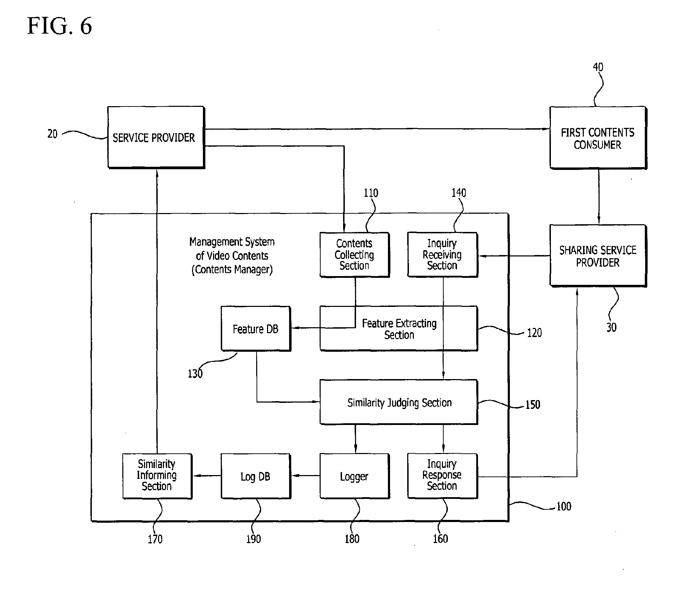

FIG. 6 is a block diagram illustrating a management system of video contents according to an exemplary embodiment of the present invention.

Referring to FIG. 6, a video contents management system 100 includes a contents collecting section 110, a feature extracting section 120, a feature database 130, an inquiry receiving section 140 and a similarity judging section 150.

The contents collecting section 110 collects a first video content from the service provider 20 providing the first video content to the first contents consumer 40.

The feature extracting section 120 extracts the first feature from the first video content collected by the contents collecting section 110.

The extracted first feature from the feature extracting section 120 is stored in the feature database 130.

The inquiry receiving section 140 receives an inquiry whether the second video content is registered in the feature database or not from the sharing website, when the second video content is shared in the sharing website of the sharing service provider 30. The inquiry receiving section 140 receives at least portion of the second video content from the sharing website. The feature extracting section 120 extracts a second feature from the receved portion of the second video content, and transfers the second feature to the similarity judging section 150.

The similarity judging section 150 judges whether the first video content and the second video content are similar or not by comparing the second feature of the second video content with the first feature stored in the feature database 130.

The video contents management system 100 may further include an inquiry response section 160. The inquiry response section 160 informs the sharing website of the similarity between the first video content and the second video content. Based on the result of the similarity between the first video content and the second video content, the sharing website may take various actions such as reject the request of uploading the second video content or stop uploading the second video content, delete the uploaded second video content or sharing-restrict the uploaded second video content, as described above.

The video contents management system 100 may further include a similarity informing section 170. The similarity informing section 170 informs the service provider 20 of the similarity between the first video content and the second video content. Although not shown in FIG. 6, based on the result of the similarity, the video contents management system 100 may compulsorily impose an advertisement on the second video content or fee-charge for downloading the second video content. The service provider 20 that is informed of the similarity may also compulsorily impose an advertisement on the second video content or fee-charge for downloading the second video content.

The video contents management system 100 may further include a logger 180 and a log database 190. The logger 180 stores the result of the similarity, and transfers the result to the log database 190. The log database 190 records and stores result of similarity between the first video content and other second video contents uploaded in the sharing website, in addition to the result of the similarity between the first video content and the second video content, by using the logger 180, and transfers the result to the similarity informing section 170. The similarity informing section 170 peridically informs the service provider 20 of the stored result according to a predetermined criterion, for example, a predetermined time interval or a predetermined amount of data.

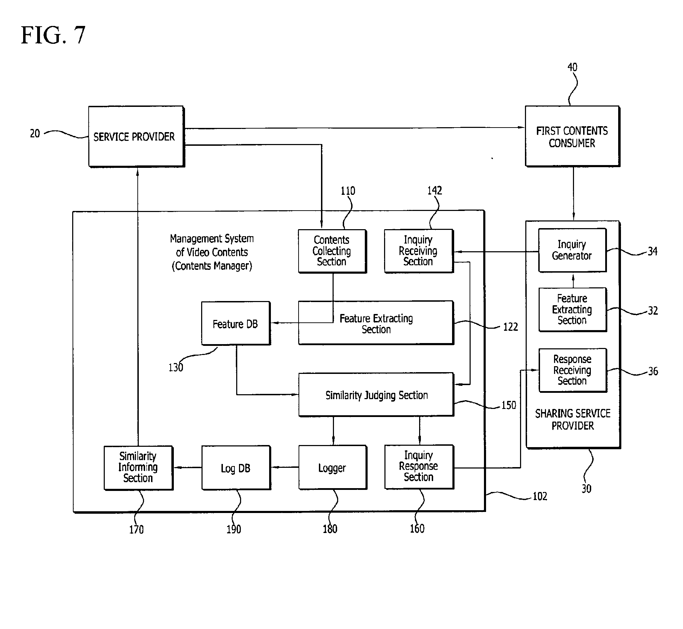

FIG. 7 is a block diagram illustrating a management system of video contents according to another exemplary embodiment of the present invention. A video contents management system in FIG. 7 is substantially the same as the video contents management system 100 illustrated in FIG. 6 except for an inquiry receiving section and a feature extracting section. Thus, any further description will be omitted.

Referring to FIG. 7, a video contents management system 102 includes a contents collecting section 110, a feature extracting section 122, a feature database 130, an inquiry receiving section 142 and a similarity judging section 150.

The inquiry receiving section 142 receives an inquiry whether a second video content is registered in the feature database 130 or not from a sharing website of the sharing service provider 30, when the second video content is shared in the sharing website when the second video contents is shared in the sharing website. The sharing website may have a module for the inquiry for the registration within itself. That is, the sharing website may extract the second feature of the second video content and transfer the extracted second feature to the inquiry receiving section 142, and the inquiry receiving section 142 transfers the second feature of the second video content to the similarity judging section 150.

The sharing service provider 30 may independently include a feature extracting section 32 that is substantially the same as the feature extracting section 122 so as to extract the second feature of the second video content for itself, and may optionally include an inquiry generator 34 to transfer the second feature extracted from the feature extracting section 32 and the second video content to the inquiry receiving section 142.

In addition, the sharing service provider 30 may further include a response receiving section 36 receiving the similarity responded from the inquiry response section 160 of the video contents management system 100.

Thus, the feature extracting section 122 extracts the first feature from the first video content collected in the contents collecting section 110, and may not extract the second feature from the second video contents.

As described above, the video contents management systems 100 and 102 may prevent illegal sharing of video contents, and thus may shield illegal contents consumers that may greatly increase. In addition, video contents for protection from sharing may be collected by the contents collecting section 110 in real-time, and sharing action may be grasped and reported by the similarity informing section 170, thereby providing a safe system for sharing prevention.

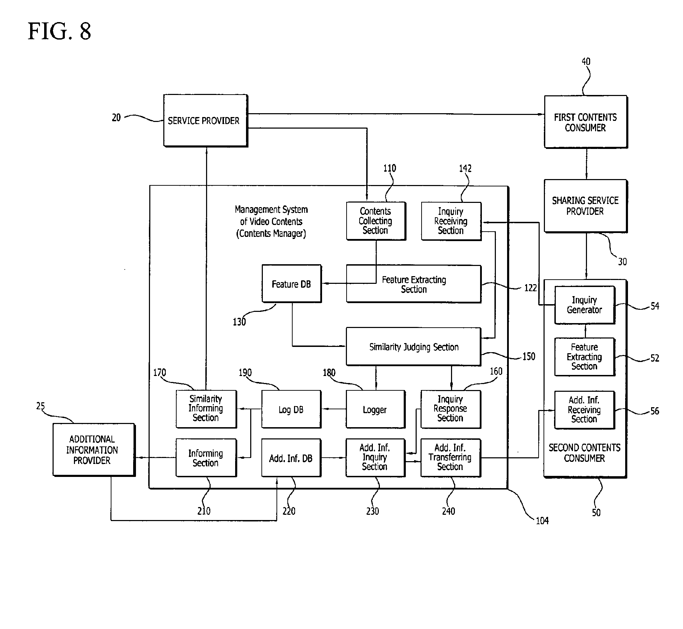

FIG. 8 is a block diagram illustrating a management system of video contents according to still another exemplary embodiment of the present invention. A video contents management system in FIG. 8 is substantially the same as the video contents management system 102 illustrated in FIG. 7 except for a structure related to additional information. Thus, any further description will be omitted.

Referring to FIG. 8, a video contents management system 104 may further include an informing section 210 of providing additional information, an additional information database 220, an additional information inquiry section 230 and an additional information transferring section 240.

Different from in FIG. 7, for example, video contents downloaded from the sharing service provider 30 by a second contents consumer 50 may be played in a video contents player. The second feature of the second video content is extracted from a feature extracting section 52, for example, by a plugin, and is transferred to an inquiry generator 54. Then, the inquiry generator 54 transfers the second feature of the second video content to the inquiry receiving section 142.

Any further description for the substantially the same processes as in FIG. 7 of the following processes will be omitted.

The additional information database 220 may store additional information related to many additional video contents. The additional information may be additional information itself, or link information such as URL for link to additional information. Such additional information may be provided from the additional information provider 25 in advance, and in case that the second video content is substantially the same as or similar to the first video content, the additional information provider 25 previously orders the contents manager to provide information related to the first video content out of the additional information stored in the additional information database 220 to the second contents consumer 50. The related information is databased in the additional information database 220 in advance.

The inquiry response section 160 that have received the result of the similarity from the similarity judging section 150, in case that the first video content and the second video content are similar, requests an inquiry of the additional information to the additional information inquiry section 230 for providing the additional information.

After the additional information inquiry section 230 receives the request for the inquiry of the additional information from the inquiry response section 160, the additional information inquiry section 230 searches the information related to the first video content out of the additional information stored in the additional information database 220, and the related information is provided to an additional information receiving section 56 of the second contents consumer 50 via the additional information transferring section 240.

The log database 190 transfers the result of the similarity to the informing section 210, in addition to the similarity informing section 170.

The informing section 210 informs an additional information provider 25 of the result of the similarity, and thus the additional information provider 25 may know that the additional information is provide to the second contents consumer 50 by using the additional information database 220 provided to a contents manager in advance. The additional information provider 25 may be the same as or different from the service provider of video contents 20.

According to the video contents management system 104, information of other video contents related to video contents played by a contents consumer may be provided to the contents consumer in real-time.

The foregoing is illustrative of the present invention and is not to be construed as limiting thereof. Although a few example embodiments of the present invention have been described, those skilled in the art will readily appreciate that many modifications are possible in the example embodiments without materially departing from the novel teachings and advantages of the present invention. Accordingly, all such modifications are intended to be included within the scope of the present invention as defined in the claims. In the claims, means-plus-function clauses are intended to cover the structures described herein as performing the recited function and not only structural equivalents but also equivalent structures. Therefore, it is to be understood that the foregoing is illustrative of the present invention and is not to be construed as limited to the specific example embodiments disclosed, and that modifications to the disclosed example embodiments, as well as other example embodiments, are intended to be included within the scope of the appended claims. The present invention is defined by the following claims, with equivalents of the claims to be included therein.

## Claims

1. A method of measuring a similarity degree of digital video contents comprising:
detecting scene conversion of a video content to divide the video content into a plurality of scenes;
extracting a first scene feature from a first scene of the divided scenes; and
measuring a similarity degree by comparing the extracted first scene feature of the first scene with a second scene feature of a second scene.

2. The method of claim 1, wherein the first scene includes a plurality of first frames, and extracting the first scene feature comprises:
extracting a first frame feature from each of the first frames; and
grouping first frame features extracted from the first frames to define the first scene feature of the first scene, and
wherein the second scene includes a plurality of second frames, and extracting the second scene feature comprises:
extracting a second frame feature from each of the second frames; and
grouping second frame features extracted from the second frames to define the second scene feature of the second scene.

3. The method of claim 2, wherein extracting the first frame feature from the first frame comprises:
histogramming angles of motion vectors of the first frame; and
selecting a predetermined number of motion vectors in order of magnitude of the histogrammed angles to define the first frame feature of the first frame, and
wherein extracting the second frame feature from the second frame comprises:
histogramming angles of motion vectors of the second frame; and
selecting a predetermined number of motion vectors in order of magnitude of the histogrammed angles to define the second frame feature of the second frame.

4. The method of claim 3, wherein the similarity degree is measured by calculating a Euclidean distance between an average of the first frame features of the first frames of the first scene and an average of the second frame features of the second frames of the second scene.

5. The method of claim 3, wherein the similarity degree is measured by calculating an average of Euclidean distances between each first frame feature of the first frames of the first scene and each second frame feature of the second frames of the second scene.

6. The method of claim 1, before detecting the scene conversion of the video content to divide the video content into the plurality of scenes,
further comprising extracting a feature by indexing signals that is transferred via a digital broadcast in real-time and storing the extracted feature in a feature databasea feature database, and
wherein the second scene is included in video contents stored in the feature database.

7. A method of managing video contents comprising:
receiving a request for registration of at least one first video content that is provided to a contents consumer from a service provider of video contents;
extracting a first feature from the first video content to store and register the extracted first feature in a feature database;
receiving an inquiry whether a second video content is registered in the feature database or not from a sharing website, when the second video content is shared in the sharing website; and
extracting a second feature from at least portion of the second video content, and judging whether the first video content and the second video content are similar or not by comparing the extracted second feature with the first feature stored in the feature database.

8. The method of claim 7, wherein the first and second features are extracted from first and second scenes or first and second frames of the first and second video contents, respectively.

9. The method of claim 7, after judging whether the first video content and the second video content are similar or not,
further comprising informing the service provider of the similarity between the first video content and the second video content.

10. The method of claim 7, after judging whether the first video content and the second video content are similar or not,
in case that the first video content and the second video content are similar,
further comprising compulsorily imposing an advertisement on the second video content or fee-charging for downloading the second video content.

11. The method of claim 7, wherein receiving the inquiry whether the second video content is registered in the feature database or not is performed when the contents consumer requests to upload the second video content on the sharing website, and in case that the first video content and the second video content are similar, the sharing website rejects the request of uploading the second video content.

12. The method of claim 7, before extracting the first feature from the first video content to store and register the extracted first feature in the feature database,
monitoring and collecting the at least one first video content in real-time.

13. The method of claim 7, after judging whether the first video content and the second video content are similar or not,
in case that the first video content and the second video content are similar,
further comprising providing additional information related to the first video content to a consumer of the second video content.

14. A management system for video contents comprising:
a contents collecting section collecting a first video content from a service provider that provides a first video content to a contents consumer;
a feature extracting section extracting a first feature from the first video content collected by the contents collecting section;
a feature database for storing the first feature extracted by the feature extracting section;
an inquiry receiving section receiving an inquiry whether a second video content is registered in the feature database or not from a sharing website, when the second video content is shared in the sharing website; and
a similarity judging section judging whether the first video content and the second video content are similar or not by comparing a second feature of the second video content with the first feature stored in the feature database.

15. The management system of claim 14, wherein the inquiry receiving section receives at least portion of the second video content from the sharing website, and the feature extracting section extracts the second feature from the received portion of the second video content and transfers the extracted second feature to the similarity judging section.

16. The management system of claim 14, wherein in the sharing website, the second feature of the second video content is extracted and transferred to the inquiry receiving section, and the inquiry receiving section transfers the second feature of the second video content to the similarity judging section.

17. The management system of claim 14, further comprising an inquiry response section informing the sharing website of the similarity between the first video content and the second video content.

18. The management system of claim 14, further comprising a similarity informing section informing the service provider of the similarity between the first video content and the second video content.

19. The management system of claim 14, further comprising:
an additional information database for storing additional information related to a plurality of additional video contents; and
an additional information transferring section providng information related to the first video content of the additional information to a consumer of the second video content, in case that the first video content and the second video content are similar.

20. A method of managing video contents comprising:
receiving a request for registration of at least one first video content that is provided to a contents consumer from a service provider of video contents;
extracting a first feature from the first video content to store and register the extracted first feature in a feature database;
receiving information related to the second video content, when the second video content is played by the contents consumer; and
judging whether the first video content and the second video content are similar or not by comparing a second feature of the second video content with the first feature stored in the feature database.

21. The method of claim 20, after judging whether the first video content and the second video content are similar or not,
in case that the first video content and the second video content are similar,
providing additional information related to the first video content.

22. The method of claim 20, before judging whether the first video content and the second video content are similar or not,
extracting the second feature from the second video content.

23. The method of claim 20, wherein the information related to the second video content includes the second feature of the second video content.
